# EUROPÄISCHE PATENTSCHRIFT

(11) **EP 1 340 433 B1**
(45) Veröffentlichungstag und Bekanntmachung des Hinweises auf die Patenterteilung: **22.11.2006**
(21) Anmeldenummer: 03004534.8
(22) Anmeldetag: 28.02.2003
(51) Int. Cl.: A23L 3/10

(54) **Autoklav zum Konservieren von Produkten**
Autoclave for preservation of products
Autoclave pour la conservation de produits

(30) Priorität: 28.02.2002 DE 10208922; 28.02.2002 DE 10208921
(43) Veröffentlichungstag der Anmeldung: 03.09.2003
(73) Patentinhaber: MASCHINENBAU SCHOLZ GMBH & CO. KG, 48639 Coesfeld (DE)
(72) Erfinder: Pawellek, Hans, 23568 Lübeck (DE); Meyer, Michael, 23562 Lübeck (DE)
(74) Vertreter: Hauck, Graalfs, Wehnert, Döring, Siemons

(56) Entgegenhaltungen:
- EP-A- 0 290 714
- US-A- 4 196 225
- US-A- 4 301 718
- US-A- 5 279 212
- US-A- 5 857 312
- PATENT ABSTRACTS OF JAPAN vol. 012, no. 398 (C-538), 21. Oktober 1988 (1988-10-21) -& JP 63 141572 A (NISSEN CORP), 14. Juni 1988 (1988-06-14)
- PATENT ABSTRACTS OF JAPAN vol. 1999, no. 03, 31. März 1999 (1999-03-31) -& JP 10 323172 A (SANYO ELECTRIC CO LTD;TOTTORI SANYO ELECTRIC CO LTD), 8. Dezember 1998 (1998-12-08)
- PATENT ABSTRACTS OF JAPAN vol. 017, no. 693 (C-1144), 17. Dezember 1993 (1993-12-17) -& JP 05 236916 A (HISAKA WORKS LTD), 17. September 1993 (1993-09-17)
- PATENT ABSTRACTS OF JAPAN vol. 015, no. 248 (C-0843), 25. Juni 1991 (1991-06-25) & JP 03 080067 A (DAIWA CAN CO LTD), 4. April 1991 (1991-04-04)
- PATENT ABSTRACTS OF JAPAN vol. 011, no. 124 (C-416), 17. April 1987 (1987-04-17) -& JP 61 260863 A (TOYO SEIKAN KAISHA LTD), 19. November 1986 (1986-11-19)
- PATENT ABSTRACTS OF JAPAN vol. 2000, no. 25, 12. April 2001 (2001-04-12) & JP 2001 231521 A (HISAKA WORKS LTD), 28. August 2001 (2001-08-28)
- PATENT ABSTRACTS OF JAPAN vol. 010, no. 252 (C-369), 29. August 1986 (1986-08-29) -& JP 61 082833 A (TRINITY IND CORP), 26. April 1986 (1986-04-26)

## Beschreibung

Die vorliegende Erfindung betrifft einen Autoklaven mit dem Merkmalen des Oberbegriffs von Patentanspruch 1.

Es ist bekannt, zum Konservieren von Produkten, insbesondere Lebensmitteln, Autoklaven einzusetzen. Diese sind in der Regel als liegende zylindrische Druckbehälter ausgebildet, wobei die zu konservierenden Produkte, insbesondere Lebensmittel in Verpackungen, wie Gläsern, Dosen etc., in sogenannten Käfigen angeordnet werden, welche in die Autoklaven hineinbewegt und nach Abschluß der Konservierungsbehandlung wieder aus diesen herausbewegt werden. Innerhalb der Käfige sind die Produkte mit Hilfe von perforierten Zwischenlagen aufeinandergestapelt, wobei Käfige und Zwischenlagen dampfdurchlässig ausgebildet sind, um eine im wesentlichen gleichmäßige Dampfbehandlung aller Produkte zu gewährleisten.

Beim Konservieren bzw. Sterilisieren findet eine anfängliche Spülphase, eine nachfolgende Aufheizphase und eine darauffolgende Sterilisierungsphase Anwendung. Nach der Sterilisierungsphase folgt eine Kühlphase, um die Produkte vor der Entnahme aus dem Autoklaven auf gesteuerte Weise abzukühlen. Der zum Sterilisieren verwendete Dampf wird mit Hilfe von Ventilatoren im Autoklaven umgewälzt.

Die vorliegende Erfindung bezieht sich auf die Kühlphase von derartigen Verfahren. Es ist bekannt, als Kühlmedium Wasser zu verwenden und dieses mit Hilfe von Düsen, die an Rohren im oberen Bereich des Autoklaven angeordnet sind, auf die Produkte zu sprühen. Bei dieser Vorgehensweise wird daher die Kühlflüssigkeit unter relativ hohem Druck auf die Produkte abgegeben. Das hat den Nachteil, dass die mit relativ hohem Druck auf die Produkte treffende Flüssigkeit von diesen wieder reflektiert wird, so dass keine innige Umspülung der Produkte mit der Kühlflüssigkeit erreicht wird. Demzufolge ist die hierdurch erreichte Wärmeübertragung von den Produkten auf die Kühlflüssigkeit nur gering, und es sind große Wassermengen erforderlich, um einen entsprechenden Kühleffekt zu erreichen. Dabei gelangt ein Großteil des Wassers ungenutzt, d.h. ohne entsprechende Wärmeenergie von den Produkten aufgenommen zu haben, zur Unterseite des Autoklaven und wird von dort über ein entsprechendes Abführrohr aus dem Inneren des Autoklaven entfernt. Darüber hinaus ist bei dieser Methode der Wasserkühlung eine gleichmäßige Beaufschlagung der Produkte nicht gewährleistet. So werden zwar die Bereiche der Produkte, die vom Sprühkegel der jeweiligen Düsen getroffen werden, gekühlt, jedoch verbleiben andere Bereiche, die nicht unmittelbar von den Düsenkegeln beaufschlagt werden, im ungekühlten Zustand. Dies trifft insbesondere auf Produkte zu, die sich im unteren und/oder inneren Bereich der Käfige befinden, da diese Bereiche nicht unmittelbar von den Düsen erreicht werden.

Man kann zwar eine Vergleichmäßigung der Beaufschlagung mit Kühlflüssigkeit dadurch erreichen, dass man die Dauer der Kühlung und die Menge der verwendeten Kühlflüssigkeit erhöht, jedoch ist dies mit beträchtlichem zusätzlichem Aufwand an Zeit, Kühlflüssigkeit und Energiekosten verbunden, was unerwünscht ist. Darüber hinaus wird durch eine zu lange Zeitdauer der Kühlphase der gesamte Konservierungsprozeß in die Länge gezogen, wodurch sich eine unwirtschaftliche Ausnutzung des Autoklaven ergibt.

Ein Autoklav mit den Merkmalen des Oberbegriffs von Patentanspruch 1 ist auf der US-A-4 301 718 bekannt. Bei dem bekannten Autoklaven sind zur Abkühlung der Produkte, die auf einer rotierenden Einrichtung im Autoklaven angeordnet sind, auf jeder Seite des Autoklaven mehrere Düsen angeordnet, die die Produkte direkt mit Kühlflüssigkeit beaufschlagen.

Aus patent abstracts of Japan Bd. 012, Nr. 398 (C-538), 21. Oktober 1988 und JP & 63 141572 A (NISSEN Corp), 14, Juni 1988 ist ein Autoklav bekannt, dessen Oberseite Sprühdüsen zum Beaufschlagen von im Autoklaven angeordneten Produkten mit Kühlflüssigkeit vorgesehen sind.

Auch in diesen Fällen werden jedoch die Produkte mit Hilfe von Düsen direkt mit der Kühlflüssigkeit beaufschlagt, so daß sich die vorstehend aufgezeigten Probleme ergeben können.

Der vorliegenden Erfindung liegt die Aufgabe zugrunde, einen Autoklaven der angegebenen Art zu schaffen, in dem ein besonders inniger Kontakt zwischen den zu kühlenden Produkten und der Kühlflüssigkeit und damit eine besonders gute und gleichmäßige Wärmeübertragung erreicht werden kann.

Diese Aufgabe wird erfindungsgemäß bei einem Autoklaven der angegebenen Art durch die kennzeichnenden Merkmale von Patentanspruch 1 gelöst.

Weiterbildungen der Erfindung gehen aus den Unteransprüchen hervor.

Die Erfindung wendet sich somit vom bekannten Prinzip der Beaufschlagung der Produkte mit unter Druck stehender Kühlflüssigkeit ab. Statt dessen werden die Produkte durch eine Kühlflüssigkeitsberieselung, d.h. drucklos unter Schwerkrafteinwirkung, gekühlt. Dies hat den Vorteil, dass sich aufgrund der Tatsache, dass die auf die Produkte auftreffende Kühlflüssigkeit nicht mehr von den Produkten reflektiert wird, eine sehr innige Umspülung der Produkte mit mehr Kühlflüssigkeitsvolumen ergibt. Insbesondere wird hierdurch erreicht, dass die auf die Oberseiten der Produkte bzw. Produktverpackungen auftreffende Kühlflüssigkeit von dort entlang den Seitenflächen der Verpackungen, insbesondere Dosen, nach unten läuft, so dass nicht nur der obere Bereich, sondern auch der seitliche Bereich der Produkte bzw. Produktverpackungen gekühlt wird. Ferner kann die Kühlflüssigkeit von den Seitenflächen der Produkte bzw. Produktverpackungen auch die Unterseite derselben kontaktieren, so dass auch ein Kühleffekt der Unterseite erreicht wird.

Mit dieser Art der Kühlung werden ferner nicht nur die in den Käfigen oben gelagerten Produkte, sondern auch die darunter angeordneten Produkte innig gekühlt, insbesondere auch die im mittleren Bereich der Käfige angeordneten Produkte. Die Kühlflüssigkeit strömt entlang den Produkten der oberen Lage nach unten und gelangt durch die perforierten Zwischenlagen, falls solche vorhanden sind, auf die darunter befindlichen Produkte. Da sich die Kühlflüssigkeit allein durch Gravitationseinflüsse nach unten bewegt, wird sie nicht von den Produkten reflektiert, so dass eine ausreichende Zeitdauer zur Wärmeübertragung verbleibt.

Mit der erfindungsgemäß durchgeführten drucklosen Kühlflüssigkeitsberieselung wird somit eine rasche und gleichmäßige Kühlung der Produkte bei geringem Kühlflüssigkeitsverbrauch erreicht. Mit den Begriff "drucklos" ist hiermit gemeint, dass die Kühlflüssigkeit die Produkte durch Schwerkraftwirkung kontaktiert, d.h. vom oberen Bereich des Autoklaven auf die darunter angeordneten Produkte gelangt. Dies soll jedoch nicht ausschließen, dass die Kühlflüssigkeit beim Austritt aus den entsprechenden Berieselungssystemen (Zuführrohren etc.) noch unter einem gewissen Restdruck (Förderdruck) stehen kann.

Bei der verwendeten Kühlflüssigkeit handelt es sich vorzugsweise um Wasser. Dieses kann, falls gewünscht oder erforderlich, mit entsprechenden Zusätzen versehen sein.

Bei den mit dem erfindungsgemäßen Verfahren behandelten Produkten handelt es sich vorzugsweise um Lebensmittel, die durch Dampfbehandlung im Autoklaven sterilisiert bzw. konserviert werden sollen. Diese Lebensmittel sind in der Regel in Verpackungen, wie Gläsern, Dosen und anderen Behältnissen, untergebracht. Die Produkte werden daher durch die durchgeführte Wasserkühlung nicht beeinträchtigt.

Bei der mit Berieselungslöchern verschenen Kühlflüssigkeitssammeleinrichtung kann sich, je nach Größe und Anzahl der Berieselunglöcher, in der Kühlflüssigkeitssammeleinrichtung eine bestimmte Flüssigkeitssäule ausbilden. Es versteht sich, dass natürlich auch dies als bezeichnet wird. "drucklos durchgeführte Kühlflüssigkeitsberieselung" bezeichnet wird. Die durch das Zuführrohr zugeführte Kühlflüssigkeit wird dabei in die Kühlflüssigkeitssammeleinrichtung abgegeben und strömt von dieser über die Berieselungslöcher auf die zu kühlenden Produkte.

Das Zuführrohr besitzt einen über der Kühlflüssigkeitssammeleinrichtung im Autoklaven angeordneten Rohrabschnitt, der Öffnungen zur Abgabe der Kühlflüssigkeit in die Kühlflüssigkeitssammeleinrichtung aufweist. Hierdurch wird eine Vorverteilung der Kühlflüssigkeit erreicht. Der Rohrabschnitt kann auch in einzelne Vorverteilerabschnitte für die Kühlflüssigkeitssammeleinrichtung unterteilt sein.

Die Kühlflüssigkeitssammeleinrichtung ist vorzugsweise wannenförmig ausgebildet und hat insbesondere einen ebenen Boden mit leicht aufwärts gekanteten Seitenwänden. Der Aufbau einer zu großen Flüssigkeitssäule innerhalb der Sammeleinrichtung ist unerwünscht, da sich hierdurch die mit einer drucklosen Beaufschlagung verbundenen Vorteile reduzieren.

Die Kühlflüssigkeitssammeleinrichtung erstreckt sich vorzugsweise über die Breite des Autoklaven, so dass die Produkte über ihre gesamte Breite mit Kühlflüssigkeit berieselt werden, insbesondere die gesamte Breite der Lagerkäfige für die Produkte abgedeckt wird.

Es versteht sich, dass vorzugsweise eine flächenmäßige Berieselung der Produkte erreicht wird, da die Berieselungslöcher insbesondere flächenmäßig in Längs- und Querrichtung des Autoklaven angeordnet sind.

Die Kühlflüssigkeitssammeleinrichtung ist vorzugsweise in Längsrichtung des Autoklaven in mehrere Einzeleinrichtungen unterteilt. Dies hat den Vorteil, dass die Wartung und der Austausch der Kühlflüssigkeitssammeleinrichtung erleichtert wird, da hierbei die Einzelwannen bzw. Einzelbleche sehr viel einfacher gehandhabt werden können als eine sich über die gesamte Länge des Autoklaven erstreckende Sammeleinrichtung. Die Einzeleinrichtungen sind im Autoklaven aneinandergesetzt, wobei sich die aufgekanteten Seitenwände kontaktieren. Ein weiterer Vorteil ergibt sich dadurch, dass eine Einzeleinrichtung jeweils einem Käfig zur Aufbewahrung der zu konservierenden Produkte zugeordnet sein kann. Auf diese Weise können beispielsweise zwischen den Käfigen Zonen angeordnet werden, die nicht mit Kühlflüssigkeit berieselt werden.

Die Erfindung wird nachfolgend anhand eines Ausführungsbeispiels in Verbindung mit der Zeichnung im einzelnen erläutert. Es zeigen:
- Figur 1: einen Längsschnitt durch einen Autoklaven; und
- Figur 2: eine Ansicht des Autoklaven der Figur 1 in Richtung des Pfeiles A in Figur 1 bei entferntem Deckel.

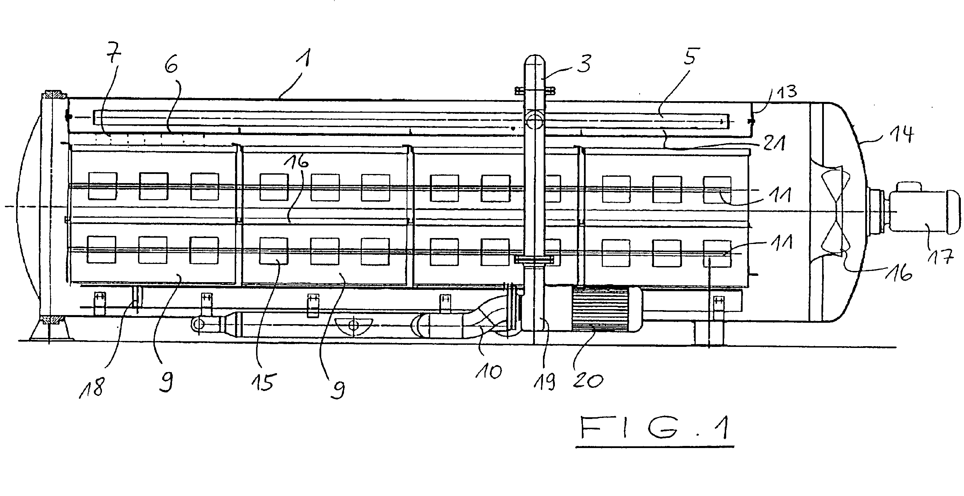

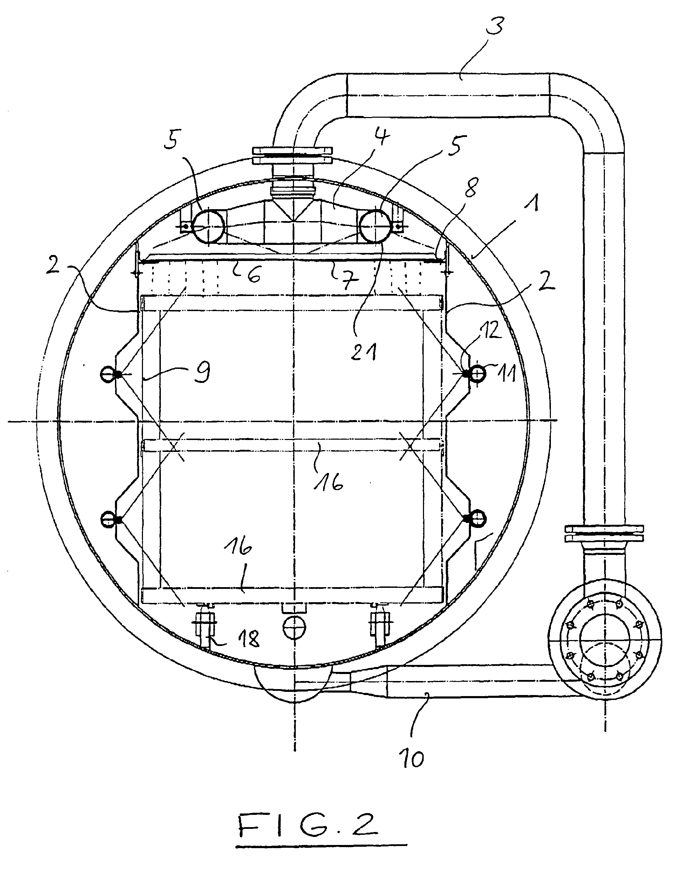

Der in den Figuren 1 und 2 dargestellte Autoklav besitzt ein Gehäuse 1 in der Form eines liegenden Zylinders, das in Figur 1 auf der linken Seite durch eine Stirnwand und auf der rechten Seite über einen öffenbaren Deckel geschlossen ist. Durch Öffnen des Deckels können sogenannte Käfige 9, die mit zu konservierenden Lebensmitteln, beispielsweise solchen in Dosen, Gläsern etc., bepackt sind, in den Autoklaven hineinbewegt werden. Nach dem Schließen des Deckels wird mit der eigentlichen Konservierung- bzw. Sterilisationsbehandlung begonnen.

Der hier dargestellte Autoklav arbeitet zum Sterilisieren mit Dampf, wobei der Dampf über einen schematisch bei 16 dargestellten Ventilator im Autoklav umgewälzt wird. Figur 2 zeigt, dass im seitlichen Bereich des Autoklaven jeweils ein vertikales Leitblech 2 angeordnet ist, das den Autoklaven in Längsrichtung in einen Mittelraum und zwei seitliche Räume unterteilt. Der Ventilator 16 drückt den Dampf durch die durch die Trennbleche 2 gebildeten Außenräume in Figur 1 von rechts nach links und saugt den Dampf durch den Mittelraum zurück. Entsprechende Einrichtungen für die Dampfumwälzung sind hier nicht gezeigt, da diese nicht Gegenstand der Erfindung bilden.

Der Ventilator 16 wird über einen am Deckel 14 angeordneten Elektromotor 17 angetrieben.

Die in den Käfigen 9 im Inneren des Autoklaven angeordneten Lebensmitteldosen sind auf perforierten Endlagen oder Zwischenlagen 16 gelagert, um den Innenraum des Autoklaven möglichst umfassend zu nutzen. Man erkennt in Figur 2, dass die Käfige 9 seitlich von den beiden Leit- bzw. Trennblechen begrenzt werden. An der Unterseite werden die Käfige 9 über geeignete Lagereinrichtungen 18 gelagert. Die Käfige können auf diesen Lagereinrichtungen gleiten, so dass sie ohne weiteres in den Autoklaven hinein und wieder aus diesem herausbewegt werden können.

Die eigentliche Konservierungs- bzw. Sterilisationsbehandlung mit Hilfe von Dampf ist für die Erfindung von untergeordneter Bedeutung und wird daher hier im einzelnen nicht mehr erläutert. Wesentlich ist, dass nach einer anfänglichen Spülphase eine Aufheizphase erfolgt, wonach die eigentliche Sterilisationsphase durchgeführt wird. Danach müssen die im Autoklaven befindlichen Lebensmitteldosen im Autoklav einer gesteuerten Abkühlung unterzogen werden, da sie im heißen Zustand nicht dem Autoklaven entnommen werden können.

Zur Durchführung dieser Abkühlung weist der Autoklav eine Zuführleitung 3 für eine geeignete Kühlflüssigkeit auf, bei der es sich in der Regel um Leitungswasser handelt. Die Zuführleitung 3 führt von einer Pumpe 19, die von einem Elektromotor 20 angetrieben wird, umgewälztes Leitungswasser am oberen Ende in den Autoklaven ein, und zwar in Längrichtung desselben an einer gegenüber der Autoklavenmitte etwas versetzten Stelle. Im Inneren des Autoklaven mündet die Zuführleitung 3 in ein Verteilerstück 4, das in zwei horizontal angeordnete Längsrohre 5 mündet, die zu beiden Seiten der Zuführleitung angeordnet sind. Diese Längsrohre erstrecken sich im wesentlichen über den Bereich des Autoklaven, der mit den zu kühlenden Lebensmitteldosen bepackt ist.

Die erwähnten Längsrohre 5 sind an ihren Unterseiten mit in Längsabschnitten angeordneten Austrittsöffnungen 21 versehen, durch die das zugeführte Wasser nach unten in den Autoklaven abgegeben wird. Dieses Wasser wird von einer wannenförmigen Sammeleinrichtung 6 aufgefangen. Man erkennt in Figur 1, dass diese wannenförmige Sammeleinrichtung 6 in Längsrichtung des Autoklaven in vier Einzeleinrichtungen unterteilt ist, welche beweglich bzw. lösbar im Autoklaven angeordnet sind. Die Einrichtungen sind auf seitlichen Halterungsflanschen 8 gelagert und können zu Wartungszwecken dem Autoklaven entnommen und wieder in diesen hineingeschoben werden. Dabei stoßen Sie mit ihren aufgekanteten Seitenflächen aneinander an.

Die wannenförmigen Sammeleinrichtungen 6 sind in der Form von Blechen ausgebildet, die mit einer Vielzahl von Löchern 7 in ihrem Boden versehen sind. Durch diese Löcher kann das in der wannenförmigen Einrichtung aufgefangene Wasser nach unten abgegeben werden, so dass die darunter befindlichen, in den Käfigen gelagerten Lebensmitteldosen berieselt bzw. beregnet werden. Die Löcher sind sowohl in Längs- als auch in Querrichtung gleichmäßig über die Böden der jeweiligen Bleche verteilt angeordnet. In den Figuren 1 und 2 sind die entsprechenden Berieselungsvorgänge angedeutet.

Das auf die oberste Lage der Lebensmitteldosen gelangende Wasser trifft auf die Decke der Dosen und fließt an den Seitenflächen der Dosen nach unten, ggf. an den Böden der Dosen zusammen. Es gelangt von dort durch die perforierte Zwischenlage 16 auf den unteren Dosenstapel, der ebenfalls auf innige Weise umflossen wird. Auf diese Weise läßt sich eine sehr gute Wärmeübertragung unter vollständiger Ausnutzung der im Wasser steckenden Kühlenergie erzielen, so dass die Dosen rasch und bei geringem Wasserverbrauch abgekühlt werden.

Nachdem das Wasser die unterste Dosenlage passiert hat, tropft es auf den Boden des Autoklaven und wird von dort über ein Abführrohr 10 mit Hilfe der Pumpe 19 abgezogen und über das Zuführrohr 3 wieder in den Autoklaven eingeführt. Bei Bedarf wird neues Wasser zugesetzt.

Die Figuren 1 und 2 zeigen ferner seitlich angeordnete Rohre 11 mit Düsen 12, die zum seitlichen Besprühen der zu konservierenden Lebensmittel dienen. Die entsprechenden quadratischen Sprühkegel dieser Düsen sind mit 15 bezeichnet.

Die Düsen 12 sind an den vertikalen Leitblechen 2 angeordnet.

## Patentansprüche

1. Autoklav zum Konservieren von Produkten, insbesondere Lebensmitteln, mit einer Einrichtung zum Einführen der Produkte in den Autoklaven, einer Einrichtung zum Beaufschlagen der Produkte im Autoklaven mit Dampf und einer Einrichtung zum Abkühlen der Produkte im Autoklaven durch Beaufschlagen derselben mit einer Kühlflüssigkeit, insbesondere Wasser, die eine im oberen Teil des Autoklaven über den zu kühlenden Produkten angeordnete Kühlflüssigkeitsabgabevorrichtung, ein Zuführrohr (3) zur Kühlflüssigkeitsabgabevorrichtung und ein Kühlflüssigkeitsabführrohr (10) aus dem Autoklaven aufweist, **dadurch gekennzeichnet, daß** die Kühlflüssigkeitsabgabevorrichtung eine Kühlflüssigkeitssammeleinrichtung (6) mit Berieselungslöchern (7) aufweist und daß das Zuführrohr (3) einen über der Kühlflüssigkeitssammeleinrichtung (6) im Autoklaven angeordneten Rohrabschnitt (5) besitzt, der Öffnungen (21) zur Abgabe der Kühlflüssigkeit in die Kühlflüssigkeitsammeleinrichtung (6) aufweist.

2. Autoklav nach Anspruch 1, **dadurch gekennzeichnet, daß** die Kühlflüssigkeitssammeleinrichtung (6) wannenförmig ausgebildet ist.

3. Autoklav nach Anspruch 1 oder 2, **dadurch gekennzeichnet, daß** die Berieselungslöcher (7) flächenmäßig in Längs- und Querrichtung des Autoklaven angeordnet sind.

4. Autoklav nach einem der vorangehenden Ansprüche, **dadurch gekennzeichnet, daß** sich die Kühlflüssigkeitssammeleinrichtung (6) über die Breite des Autoklaven erstreckt.

5. Autoklav nach einem der vorangehenden Ansprüche, **dadurch gekennzeichnet, daß** die Kühlflüssigkeitssammeleinrichtung (6) in Längsrichtung des Autoklaven in mehrere Einzeleinrichtungen unterteilt ist.

6. Autoklav nach Anspruch 5, **dadurch gekennzeichnet, dass** eine Einzeleinrichtung jeweils einem Käfig (9) zur Aufbewahrung der zu konservierenden Produkte zugeordnet ist.

7. Autoklav nach einem der vorangehenden Ansprüche, **dadurch gekennzeichnet, dass** der Rohrabschnitt in einzelne Vorverteilerabschnitte für die Kühlflüssigkeitssammeleinrichtung (6) unterteilt ist.

8. Autoklav nach einem der vorangehenden Ansprüche, **dadurch gekennzeichnet, daß** die Kühleinrichtung ferner mindestens eine seitlich vom zu kühlenden Produkt im Autoklaven angeordnete Sprühdüse (12) aufweist, die das Produkt in seitlicher Richtung besprüht.

9. Autoklav nach Anspruch 8, **dadurch gekennzeichnet, daß** die mindestens eine Sprühdüse am vertikalen Leitblech (2) angeordnet ist.

## Claims

1. An autoclave for the preservation of products, especially food, comprising means for introducing the products into the autoclave, means for applying vapour to the products within the autoclave and means for cooling the products within the autoclave by applying a cooling liquid, especially water, to the same, said means comprising a cooling liquid discharge device located in the upper part of the autoclave above the products which are to be cooled, a supply tube (3) to the cooling liquid discharge device and a cooling liquid discharge tube (10) from the autoclave, **characterized in that** the cooling liquid discharge device includes a cooling liquid collecting means (6) with irrigating holes (7) and that the supply tube (3) has a tube portion (5) located above the cooling liquid collecting means (6) within the autoclave and comprising apertures (21) for discharging the cooling liquid into the cooling liquid collecting means (6).

2. The autoclave according to claim 1, **characterized in that** the cooling liquid collecting means (6) is formed in a trough-like manner.

3. The autoclave according to claim 1 or 2, **characterized in that** the irrigating holes (7) are areally located in longitudinal and transversal direction of the autoclave.

4. The autoclave according to one of the preceding claims, **characterized in that** the cooling liquid collecting means (6) extends over the width of the autoclave.

5. The autoclave according to one of the preceding claims, **characterized in that** the cooling liquid collecting means (6) is divided into a plurality of individual means in longitudinal direction of the autoclave.

6. The autoclave according to claim 5, **characterized in that** a respective individual means is associated with a respective cage (9) for storing the products which are to be preserved.

7. The autoclave according to one on of the preceding claims, **characterized in that** the tube portion is divided into individual pre-distributing portions for the cooling liquid collecting means (6).

8. The autoclave according to one of the preceding claims, **characterized in that** the cooling means furthermore includes at least one spray nozzle (12) located laterally with respect to the product to be cooled in the autoclave, said spray nozzle spraying onto the product in lateral direction.

9. The autoclave according to claim 8, **characterized in that** the at least one spray nozzle is disposed at a vertical baffle (2).

## Revendications

1. Autoclave pour la conservation de produits, en particulier de produits alimentaires, comprenant un dispositif pour introduire les produits dans l'autoclave, un dispositif pour appliquer de la vapeur sur les produits dans l'autoclave et un dispositif pour refroidir les produits dans l'autoclave en appliquant sur ceux-ci un liquide de refroidissement, en particulier de l'eau, qui présente un dispositif de distribution de liquide de refroidissement disposé dans la partie supérieure de l'autoclave au-dessus des produits à refroidir, un tuyau d'amenée (3) vers le dispositif de distribution de liquide de refroidissement et un tuyau d'évacuation de liquide de refroidissement (10) de l'autoclave, **caractérisé en ce que** le dispositif de distribution de liquide de refroidissement présente un dispositif collecteur de liquide de refroidissement (6) avec des orifices d'irrigation (7) et **en ce que** le tuyau d'amenée (3) a une section de tuyau disposée au-dessus du dispositif collecteur de liquide de refroidissement (6) dans l'autoclave laquelle présente des ouvertures (21) pour la distribution du liquide de refroidissement dans le dispositif collecteur de liquide de refroidissement (6).

2. Autoclave selon la revendication 1, **caractérisé en ce que** le dispositif collecteur de liquide de refroidissement (6) est configuré en forme de cuvette.

3. Autoclave selon la revendication 1 ou 2, **caractérisé en ce que** les orifices d'irrigation (7) sont disposés en surface dans le sens longitudinal et dans le sens transversal de l'autoclave.

4. Autoclave selon l'une des revendications précédentes, **caractérisé en ce que** le dispositif collecteur de liquide de refroidissement (6) s'étend sur la largeur de l'autoclave.

5. Autoclave selon l'une des revendications précédentes, **caractérisé en ce que** le dispositif collecteur de liquide de refroidissement (6) est subdivisé en plusieurs dispositifs individuels dans le sens longitudinal de l'autoclave.

6. Autoclave selon la revendication 5, **caractérisé en ce qu'**un dispositif individuel est chaque fois associé à une cage (9) pour le dépôt des produits à conserver.

7. Autoclave selon l'une des revendications précédentes, **caractérisé en ce que** la section de tuyau est subdivisée en sections individuelles de prédistribution pour le dispositif collecteur de liquide de refroidissement (6).

8. Autoclave selon l'une des revendications précédentes, **caractérisé en ce que** le dispositif de refroidissement présente en outre au moins une buse de pulvérisation (12) disposée latéralement par rapport au produit à refroidir dans l'autoclave, qui pulvérise le produit dans le sens latéral.

9. Autoclave selon la revendication 8, **caractérisé en ce que** ladite au moins une buse de pulvérisation est disposée sur la tôle de guidage verticale (2).
